Europäisches Patentamt

European Patent Office

Office européen des brevets

(11) Publication number: **0 145 446**
**B1**

# EUROPEAN PATENT SPECIFICATION

(45) Date of publication of patent specification: **24.05.89**

(51) Int. Cl.⁴: **G 11 B 5/66**

(21) Application number: **84308447.6**

(22) Date of filing: **05.12.84**

(54) Vertical magnetic recording medium.

(30) Priority: **12.12.83 JP 233841/83**
**27.12.83 JP 251093/83**

(43) Date of publication of application:
**19.06.85 Bulletin 85/25**

(45) Publication of the grant of the patent:
**24.05.89 Bulletin 89/21**

(84) Designated Contracting States:
**DE FR GB**

(56) References cited:
**EP-A-0 048 414**
**EP-A-0 089 609**
**BE-A- 632 673**

(73) Proprietor: **Matsushita Electric Industrial Co., Ltd.**
**1006, Oaza Kadoma**
**Kadoma-shi Osaka-fu, 571 (JP)**

(72) Inventor: **Sugita, Ryuji**
**8-7, Ogurachi**
**Hirakata-shi (JP)**
Inventor: **Honda, Kazuyoshi**
**5-34, Jonancho-1-chome**
**Takatsuki-shi (JP)**
Inventor: **Nishida, Hiroshi**
**14-17, Nishitoriishi-3-chome**
**Takaishi-shi (JP)**
Inventor: **Noda, Kyoji**
**Shomeiryo, 381 Aza Kyozuka Oaza Hirakida**
**Taimeicho Tamana-gun Kumamoto-ken (JP)**

(74) Representative: **Woodin, Anthony John et al**
**Fitzpatricks Europe House Box No. 88 World**
**Trade Centre East Smithfield**
**London E1 9AA (GB)**

Courier Press, Leamington Spa, England.

## Description

This invention relates to a vertical magnetisation recording medium having excellent short wavelength recording and reproduction characteristics.

As one example of a known magnetic recording system having an excellent short wavelength recording characteristic there has been used previously a vertical magnetic recording system, with a vertical magnetisation recording medium having an easy magnetisation axis which is substantially normal to the film surface of the medium. The residual magnetisation, after signals have been recorded on such a medium, is located in the direction substantially normal to the film surface of the medium, so that the shorter wavelength of the signal provides a lower demagnetising field within the medium, thereby producing excellent reproductive output. A Co-Cr vertical magnetisation recording medium called a single layer film medium, is a vertical magnetisation film have a Co-Cr alloy as a main component and formed on a non-magnetic substrate by sputtering or vacuum evaporation technique which may include a method such as evaporating atoms of the material which are partially ionised and deposited, rather like ion-plating.

For improvements of recording efficiency and reproductive output, a so-called double film medium has been proposed which incorporates a permalloy film sandwiched between a non-magnetic substrate and a Co-Cr vertical magnetisation film.

Further, a vertical magnetisation recording medium comprising a non-magnetic substrate, a non-magnetic layer, a permalloy film of, say, not greater than 200 nm thickness and a magnetic Co-Cr layer is also known from EP—A—0 089 609.

The recording and reproduction characteristics using known, auxiliary magnetic pole excitation-type, vertical heads on such double layer film mediums are improved to the extent of, say, 20 dB in recording efficiency and, say, 20 dB in reproductive output.

As described above, however, the employment of the double layer medium gives excellent recording and reproduction characteristics, but to a degree which is not sufficient, in view of the implementation of high density and compact magnetic recording and reproduction devices. Thus, more excellent characteristics are required for this purpose.

An object of this invention is to provide a vertical magnetisation recording medium having an excellent reproduction characteristic.

Accordingly the inventive, vertical magnetisation recording medium is characterised in that, the permalloy film consists of a plurality of permalloy layers which are separated by at least one first intermediate, non-magnetic layer located therebetween and of which each is 200 nm or less thick and in that, a vertical magnetisation film is formed on the permalloy film either directly or indirectly via a second intermediate, non-magnetic layer.

In an embodiment, the vertical magnetisation film is of Co-Cr and, preferably, each permalloy layer is not greater than 120 nm in thickness. Also, the or each first intermediate, non-magnetic layer may be of Ti and may have a thickness which ranges from 1 nm to 50 nm. The, or at least one of the pairs of the plurality of, permalloy layers can be of different thickness to each other, in which case, a preferred embodiment has a pair of permalloy layers constituted by an upper layer nearest the vertical magnetisation film and a lower layer nearest the non-magnetic substrate, the upper layer being thinner than the lower layer.

Embodiments and associated advantages, of the invention will be apparent from the following description which is given by way of example and is to be read in conjunction with the accompanying drawings, in which:

Fig. 1 is a sectional view showing the construction of a conventional double layer film medium;

Figs. 2 and 3 are respective sectional views each showing an embodiment of double layer film medium according to the invention;

Fig. 4 is a graph showing an entire film thickness of a permalloy film versus reproductive output characteristic;

Fig. 5 is a graph showing an entire film thickness of the permalloy film versus initial permeability characteristic;

Fig. 6 is a graph showing reproductive characteristics of several kinds of double layer film medium;

Fig. 7 is a sectional view showing a double layer film medium according to another embodiment of this invention; and

Figs. 8—12 are respective sectional views each showing a double layer film medium according to embodiments of the invention.

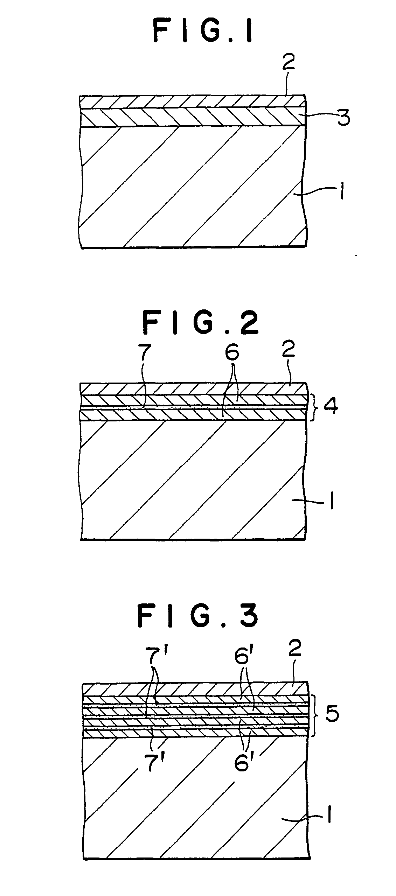

Explanations will be made on the embodiments of the invention referring to Figs. 2—12. The conventional double layer film medium is formed by a single layer structure of a permalloy film 3 as shown in Fig. 1, while a double layer film medium according to this invention, namely, each of permalloy films 4 and 5 is formed by a multilayer structure such as that shown in Figs. 2 and 3. More specifically, the permalloy film 4 of Fig. 2 is of a double layer structure having two permalloys layers 6 separated by a non-magnetic layer 7 placed therein. The permalloy film 5 of Fig. 3 is of a quadruple structure having four permalloy layers 6' respectively separated by a non-magnetic layer 7' located therebetween.

It has been confirmed that the so-formed double layer film medium having a permalloy film with a multilayer structure, as a result of measurement of the recording and reproduction characteristics thereof, provides an increased reproductive output as compared with the known double layer film medium having a single permalloy layer structure, as will be explained hereinbelow.

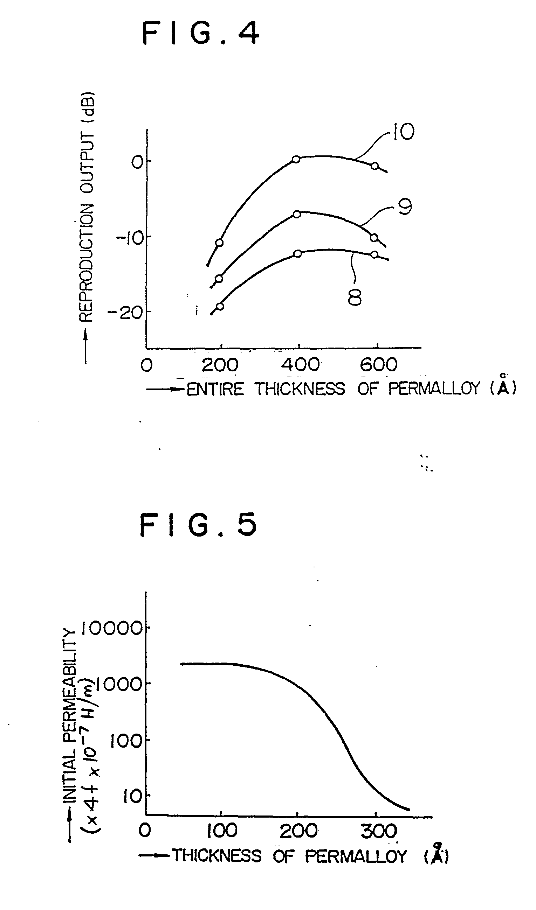

Fig. 4 illustrated a reproductive output as a function of the entire permalloy film thickness, using the structure thereof as a parameter. It is assumed that the thickness of the Co-Cr vertical magnetisation film is fixed at 150 nm and that the non-magnetic layer(s) within the permalloy film is a Ti layer of 10 nm thickness. Also, it is assumed that the recording and reproduction of signals are carried out by using an auxiliary magnetic pole excitation type vertical head with a recording density of 20 KFRPC, which value represents a recording state of digital signals, with 20,000 times magnetisation inversions for one centimetre.

Curves 8, 9 and 10 in Fig. 4 illustrate the relationship between the entire thickness of the permalloy film and the reproductive output in the case where the double layer film medium is of a permalloy film of a single layer structure, double layer structure and quadruple layer structure, respectively. As understood from this figure, where the entire thickness of the permalloy film is fixed, the more the number of permalloy layers of a multistructure, the higher is the reproductive output. This is guessed to be attributed to the magnitude of the initial permeability of the permalloy film. The specific causes therefor may be the following two points. Firstly, the initial permeability of the permalloy film will increase with the reduction of the thickness for one layer, with the film being of a multi-layer structure. Secondly, when the permalloy film is of a single layer structure, the initial permeability of the entire permalloy film will decrease, due to the magneto-static interaction between the Co-Cr film and the permalloy film. On the other hand, when the permalloy film is of a multi-layer structure, as in accordance with this invention, the initial permeability of only the permalloy layer nearest the Co-Cr film will decrease while that of any permalloy layer other than the above-mentioned permalloy layer will not decrease. It is considered that these facts constitute the main causes of the increase of the reproductive output of the vertical magnetisation recording medium according to this invention. Thus, this invention particularly considers the fact that the magnetic characteristic of the permalloy film varies due to its magneto-static interaction with the Co-Cr film, which has not ever been considered in the conventional vertical magnetisation recording medium. The meritorious effects of this invention were first confirmed through the experiments conducted by the inventors of this invention.

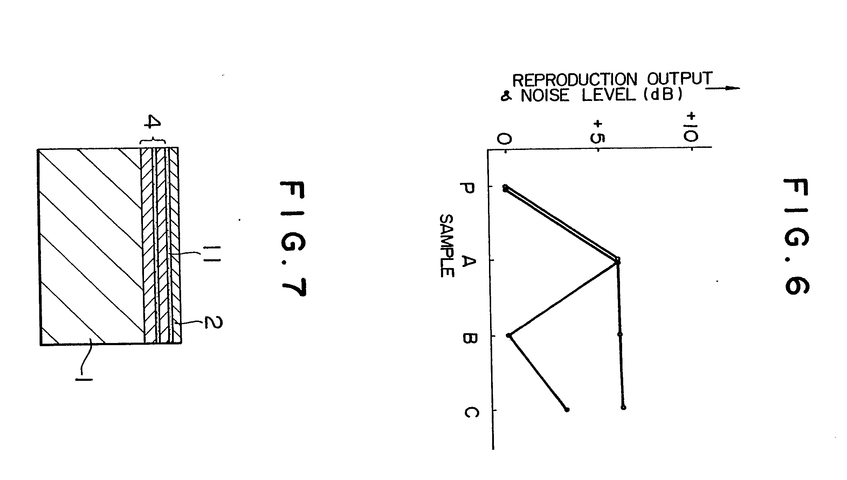

Fig. 5 shows the relationship between the thickness and the initial permeability in the case where a permalloy film is formed on a substrate of heat resistive high polymer by vacuum evaporation. The permalloy film of the double layer film medium acts as a portion of a head at the times of recording and reproduction. Therefore, the initial permeability of the permalloy film must be at least $4\pi \times 10^{-4}$ H/m. As seen from Fig. 5, in order to obtain a permalloy film having an initial permeability of $4\pi \times 10^{-4}$ H/m or more, the film thickness thereof must be 200 nm, the initial permeability varying with the film thickness and so lacks stability. With the thickness of the permalloy film being 120 nm or less, the initial permeability is fixed to about $\pi \times 10^{-3}$ H/m and is stabilized. It has been confirmed through the experiments by the inventors that such a permalloy film does not vary in its initial permeability, even with plural layers stacked, by locating an intermediate non-magnetic layer(s) of 1 nm or more therebetween. Therefore, in view of the initial permeability, the thickness of each of the permalloy layers, that is, 6 in Fig. 2 and 6' in Fig. 3, must be 200 nm or less and is preferably 120 nm or less, when considering stability.

As described above, when a plurality of permalloy layers are stacked, the thickness of any non-magnetic layer therebetween should be 1 nm or more, since a non-magnetic layer of 1 nm or less gives an abrupt increase in the interaction between the permalloy layers, thereby reducing the initial permeability of the entire permalloy film. Further, when the thickness of the non-magnetic layer(s) exceeds 50 nm, the recording and reproduction characteristics in the mode of a double layer film medium deteriorates abruptly. The reason therefor is not still clear but may possibly be ascribed to the loss in space between the head and the medium.

The or each intermediate, non-magnetic layer 7, 7' in the permalloy film may be made of any one of Al, Si, Cu, Ti, $Al_2O_3$ and $SiO_2$ but it has been confirmed experimentally by the inventors that Ti is the most suitable. More specifically, in the case of the double layer film medium, the c-axis of the hexagonal close packed structure in the Co-Cr vertical magnetisation film must be oriented in the direction normal to the film surface, with the non-magnetic layer of Ti providing the best orientation.

As mentioned above, the multi-layer structure of the permalloy film in the mode of the double layer film medium provides a higher reproductive output than the conventional double layer film medium. However, further experiments have revealed that the mere multi-layer structure of the permalloy film may increase noise depending on the head or measurement requirements. Explanation will be made on the details of this and the countermeasure therefor.

There will be explained the reproduction output and noise when having varied the thickness of each layer in the permalloy film in the mode of double layer film medium. With the thickness of the Co-Cr vertical magnetisation film in the double layer film medium and the total thickness of the permalloy film being fixed to 200 nm and 300 nm, respectively, the reproduction output and noise level as regards each of the following double layer film medium samples P, A, B and C have been measured. Incidentally, in the following Table, an upper layer represents the permalloy layer in contact with the Co-Cr film in Fig. 2, whilst a lower layer represents the permalloy layer in contact with the substrate in Fig. 2.

TABLE

| Sample | Permalloy Film Structure |
|--------|--------------------------|
| P | Single layer structure (Conventional) |
| A | Double layer structure with both upper and lower layers having the same thickness of 150 nm |
| B | Double layer structure with the upper and lower layers having thicknesses of 100 nm and 200 nm, respectively. |
| C | Double layer structure with the upper and lower layers having thicknesses of 200 nm and 100 nm, respectively. |

Fig. 6 shows an example of the reproduction output and noise level in each of the above double layer film medium. In the figure ○ marks and ● marks represent the reproduction output and noise level, respectively, with reference to those of the conventional double layer film medium represented by sample P. The recording and reproduction were carried out by using the known auxiliary magnetic pole excitation type vertical head, with the recording density fixed to 50 KFRPC. The main magnetic pole in this head is composed of a CO—Zr system, amorphous thin film 300 nm thick, sandwiched by ceramics, and has a tip shape of a ball with a radius of 2 mm. Measurement has been made by causing this main magnetic pole to be contacted with the medium by a pressing force of 10 g. A polyimide film 40 μm thick has been used as a substrate of the medium.

As seen from Fig. 6, all the samples A, B and C have a reproduction output of +6 dB with reference to the sample P. As for the noise level, the sample B is substantially the same as the sample P, but the samples A, C are +6 dB and +3 dB with reference to the sample P, respectively. Thus, the samples A, B and C have a signal-to-noise (S/N) ratio of 0 dB, +6 dB and +3 dB with reference to the sample P and so the sample B is the best.

Accordingly, it is to be understood that the double layer film medium having the different thickness of each of the upper and lower layers of the double permalloy layer structure provides a reproduction output with a very much better S/N ratio than the double layer film medium having the same thickness thereof. Further, it is also to be understood that the permalloy layer nearest the Co-Cr vertical magnetisation film 2 is made thinner than that which is nearest the non-magnetic substrate 1, as in the sample B, so that the reproduction output with a much better S/N ratio than the case of a structure different to the above structure can be obtained. This conclusion also applies in the case of a three- or more- layer structure for the permalloy film 2, as well as the double layer structure thereof, which has been experimentally confirmed by the inventors. With the main magnetic pole having a tip shape of a ball with a 60 mm radius and contacted to the medium by a pressing force of 10 g, the same measurement as above provides the same reproduction output as, and the different noise level from, the above case. More specifically, in the case of the main magnetic pole having a tip shape of a ball with a 2 mm radius, the samples A and C have a noise level of +6 dB and +3 dB with reference to the sample P, respectively. On the other hand, in the case of the main magnetic pole having a tip shape of the ball with a 60 mm radius, the samples A, B, C and P provide substantially the same noise level. Namely, in the latter case, the S/N ratio of the reproduction output is not influenced by the relationship between the respective thicknesses of the permalloy layers, while in the former case it is greatly influenced thereby, and the structure of the sample B provides a reproduction output with an excellent S/N ratio, as mentioned above. The reason for such phenomenon is not still clear, but is considered to be attributed to the magneto-striction constant, magnetic-anisotropy constant and magnetic domain structure of the permalloy film.

In the above embodiment, the explanation has been made on the double layer film medium in which the Co-Cr vertical magnetisation is formed directly on the permalloy film. However, placing a non-magnetic layer 11 between both films, as shown in Fig. 7, also provides the same result as the above embodiment, provided that the thickness of the non-magnetic layer 11 is about 50 nm or less. Incidentally, replacing this non-magnetic layer 11 by Ti or an amorphous layer provides a meritorious effect of greatly improving the vertical orientation of the c-axis of the Co-Cr vertical magnetisation film 2.

Hereinafter, more specific embodiments will be explained.

Embodiment 1

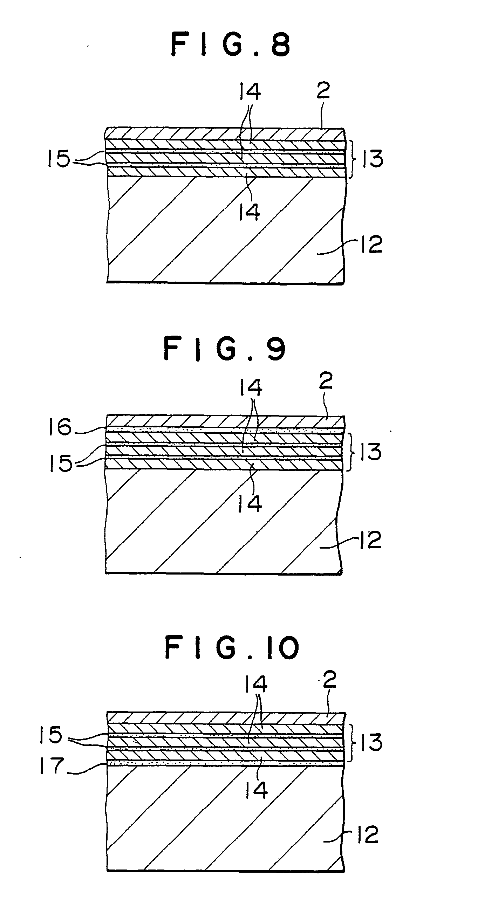

A first embodiment of this invention will be explained referring to Fig. 8. In the figure, numeral 12 designates a film substrate 50 μm thick made of a heat-resistive high polymer, 2 a Co-Cr vertical magnetisation film of 200 nm thickness, 13 a permalloy film with a triple layer structure in which three permalloy layers 14, each 120 nm thick, are stacked with intermediate Ti films 15. When signals are recorded with a recording density of 40 KFRPC and reproduced on the above structure of double layer film medium by using an auxiliary magnetic pole excitation type vertical head, there can be obtained a reproduction output higher to the extent of 30 dB than the conventional Co-containing iron-oxide particulate type medium. There can be also obtained a reproduction output higher to the extent of 9 dB than the double layer film medium having the same structure as Fig. 8, except that the permalloy film is of a single layer structure and 360 nm thick.

Embodiment 2

A second embodiment of this invention will be explained referring to Fig. 9, which shows the same structure as that of Fig. 8 except that a Ti film 30 nm thick has been placed between the permalloy film 13 and the Co-Cr vertical magnetisation film 2. The Ti film 16 improves the orientation of the Co-Cr vertical magnetisation film. When signals are recorded on such a structure of double layer film medium and reproduced therefrom, in the same manner as the first embodiment, there can be obtained a reproduction output higher to the extent of 32 dB than the conventional Co-containing iron-oxide particulate type medium.

Embodiment 3

A third embodiment of this invention will be explained referring to Fig. 10, which shows the same structure as that of Fig. 8 except that a Ti film 17 30 nm thick has been placed between the permalloy film 13 and the film substrate 12 of a heat resistive high polymer. The Ti film 17 improves the orientation of the Co-Cr vertical magnetisation film 2 as in the case of the second embodiment. When signals are recorded on such a structure of double layer film medium and reproduced therefrom in the same manner as the first and second embodiments, there can be obtained a reproduction output higher to the extent of 34 dB than the convention Co-containing iron-oxide particulate type medium.

Embodiment 4

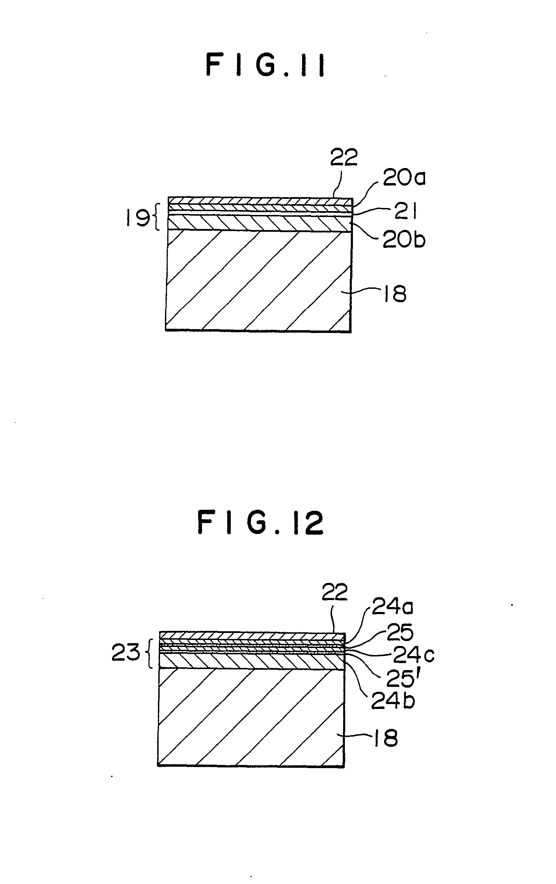

A fourth embodiment will be explained referring to Fig. 11 in which numeral 18 denotes a polyethylene terephthalate film 50 μm thick, 19 denotes a permalloy film of a double layer structure which is composed of an upper layer 20a 100 nm thick, a lower layer 20b 200 nm thick and a Ti film 21 15 nm thick placed therebetween, and 22 denotes a Co-Cr vertical magnetisation film 180 nm thick. When signals are recorded on such a structure of double layer film medium and reproduced therefrom in the same manner as in the preceding three embodiments, there can be obtained a S/N ratio higher to the extent of 28 dB than the conventional Co-containing iron-oxide particulate type medium. There can be also obtained a S/N ratio higher to the extent of +7 dB than the double layer film having the same structure as that of Fig. 11, except that the permalloy film is of a single layer structure and has a thickness of 300 nm.

Embodiment 5

A fifth embodiment will be explained referring to Fig. 12 in which numerals 18, 22 refer to the same elements in the fourth embodiment. Numeral 23 denotes a triple layer structure of permalloy film, which is composed of an upper layer 24a 60 nm thick, an intermediate layer 24c 60 nm thick, and a Ti film 25 15 nm thick placed therebetween, a lower layer 24b 200 nm thick and a Ti film 25' 15 nm thick placed between the intermediate layer 24c and the lower layer 24b. Recording and reproducing in the same manner as in the preceding four embodiments provides a S/N ratio higher to the extent of 31 dB than the conventional Co-containing iron-oxide particulate type medium.

Claims

1. A vertical magnetisation recording medium comprising a non-magnetic substrate (1, 12, 18), a permalloy film (4, 5, 13, 19, 23) formed on the non-magnetic substrate (1, 12, 18) and a vertical magnetisation film (2, 22) formed on the permalloy film (4, 5, 13, 19, 23), characterised in that, the permalloy film (4, 5, 13, 19, 23) consists of a plurality of permalloy layers (6, 6', 14; 20a, 20b; 24a, 24b, 24c) which are separated by at least one first intermediate, non-magnetic layer (7, 7', 15, 21; 25, 25') located therebetween and of which each is 200 nm or less thick and in that, the vertical magnetisation film (2, 22) is formed on the permalloy film (4, 5, 13, 19, 23) either directly or indirectly via a second intermediate, non-magnetic layer (11, 16).

2. A vertical magnetisation recording medium according to claim 1, characterised in that, the vertical magnetisation film (2, 22) is a Co-Cr vertical magnetisation film.

3. A vertical magnetisation recording medium according to claim 1 or 2, characterised in that, each of the plurality of permalloy layers (6, 6', 14; 20a, 20b; 24a, 24b, 24c) is 120 nm or less thick.

4. A vertical magnetisation recording medium according to claim 1, 2 or 3, characterised in that, the or each first intermediate, non-magnetic layer (7, 7', 15, 21; 25, 25') is made of Ti.

5. A vertical magnetisation recording medium according to any preceding claim, characterised in that, the thickness of the or each first intermediate, non-magnetic layer (7, 7', 15, 21; 25, 25') ranges from 1 nm to 50 nm.

6. A vertical magnetisation recording medium according to any preceding claim, characterised in that, the or at least one of the pairs of the plurality of permalloy layers (6, 6', 14; 20a, 20b; 24a, 24b, 24c) are of different thicknesses to each other, respectively.

7. A vertical magnetisation recording medium according to claim 6, characterised in that, said pair of permalloy layers (6, 6', 14; 20a, 20b; 24a, 24b, 24c) is constituted by an upper layer (20a, 24a) nearest the vertical magnetisation film (22) and a lower layer (20b, 24b) nearest the non-magnetic substrate (18), the upper layer (20a, 24a) being thinner than the lower layer (20b, 24b).

**Patentansprüche**

1. Aufzeichnungsmedium für Vertikalmagnetisierung mit einem nichtmagnetischen Substrat (1, 12, 18), einem auf dem nichtmagnetischen Substrat (1, 12, 18) ausgebildetem Permalloyfilm (4, 5, 13, 19, 23) und (4, 5, 13, 19, 23) und einem auf dem Permalloyfilm (4, 5, 13, 19, 23) ausgebildeten Vertikalmagnetisierungsfilm (2, 22), dadurch gekennzeichnet, daß

der Permalloyfilm (4, 5, 13, 19, 23) aus einer Mehrzahl von Permalloyschichten (6, 6', 14; 20a, 20b; 24a, 24b, 24c) besteht, die durch mindestens eine dazwischen angeordnete erste nichtmagnetische Zwischenschicht (7, 7', 15, 21; 25, 25') voneinander getrennt sind und deren jede 200 nm oder weniger dick ist und daß

der Vertikalmagnetisierungsfilm (2, 22) auf dem Permalloyfilm (4, 5, 13, 19, 23) entweder unmittelbar oder mittelbar über eine zweite nichtmagnetische Zwischenschicht (11, 16) ausgebildet ist.

2. Aufzeichnungsmedium für Vertikalmagnetisierung nach Anspruch 1, dadurch gekennzeichnet, daß der Vertikal magnetisierungsfilm (2, 22) ein Co-Cr Vertikalmagnetisierungsfilm ist.

3. Aufzeichnungsmedium für Vertikalmagnetisierung nach Anspruch 1 oder 2, dadurch gekennzeichnet, daß jede aus der Mehrzahl von Permalloyschichten (6, 6', 14; 20a, 20b; 24a, 24b, 24c) 120 nm oder weniger dick ist.

4. Aufzeichnungsmedium für Vertikalmagnetisierung nach Anspruch 1, 2 oder 3, dadurch gekennzeichnet, daß jede erste nichtmagnetische Zwischenschicht (7, 7', 15, 21; 25, 25') aus Ti besteht.

5. Aufzeichnungsmedium für Vertikalmagnetisierung nach einem der vorhergehenden Ansprüche, dadurch gekennzeichnet, daß die Dicke der oder jeder ersten nichtmagnetischen Zwischenschicht (7, 7', 15, 21; 25, 25') im Bereich von 1 nm bis 50 nm liegt.

6. Aufzeichnungsmedium für Vertikalmagnetisierung nach einem der vorhergehenden Ansprüche, dadurch gekennzeichnet, daß die bzw. wenigstens eines der Paare aus der Mehrzahl der Permalloyschichten (6, 6', 14; 20a, 20b; 24a, 24b, 24c) untereinander eine verschiedene Dicke aufweisen.

7. Aufzeichnungsmedium für Vertikalmagnetisierung nach Anspruch 6, dadurch gekennzeichnet, daß das Paar von Permalloyschichten (6, 6', 14; 20a, 20b; 24a, 24b, 24c) durch eine dem Vertikalmagnetisierungsfilm (22) nächstgelegene obere Schicht (20a, 24a) und eine dem nichtmagnetischen Substrat nächstgelegene untere Schicht (20b, 24b) gebildet ist, wobei die obere Schicht (20a, 24a) dünner ist als die untere Schicht (20b, 24b).

**Revendications**

1. Support d'enregistrement à magnétisation verticale comprenant un substrat en un matériau non-magnétique (1, 12, 18), un film de permalloy (4, 5, 13, 19, 23) formé sur ledit substrat (1, 12, 18) et un film à magnétisation verticale (2, 22) formé sur le film de permalloy (4, 5, 13, 19, 23), caractérisé en ce que ledit film de permalloy (4, 5, 13, 19, 23) est constitué de plusieurs couches de permalloy (6, 6', 14; 20a, 20b; 24a, 24b, 24c) qui sont séparées par au moins une première couche intermédiaire (7, 7', 15, 21; 25, 25') en un matériau non-magnétique placée entre elles et dont chacune a une épaisseur de 20 nm ou moins, et en ce que le film à magnétisation verticale (2, 22) est formé sur le film en permalloy (4, 5, 13, 19, 23) soit directement soit indirectement au moyen d'une seconde couche intermédiaire (11, 16) en un matériau non-magnétique.

2. Support d'enregistrement selon la revendication 1, caractérisé en ce que le film à magnétisation verticale (2, 22) est un film en Co-Cr.

3. Support d'enregistrement selon la revendication 1 ou 2, caractérisé en ce que chacune desdites couches de permalloy (6, 6', 14; 20a, 20b; 24a, 24b, 24c) a une épaisseur de 120 nm ou moins.

4. Support d'enregistrement selon l'une quelconque des revendications 1 à 3, caractérisé en ce que la ou chaque première couche intermédiaire (7, 7', 15, 21; 25, 25') en un matériau non-magnétique est faite de Ti.

5. Support d'enregistrement selon l'une quelconque des revendications précédentes, caractérisé en ce que la ou chaque première couche intermédiaire (7, 7', 15, 21; 25, 25') en un matériau non-magnétique a une épaisseur comprise entre 1 et 50 nm.

6. Support d'enregistrement selon l'une quelconque des revendications précédentes, caractérisé en ce que la ou au moins l'une des paires desdites couches de permalloy (6, 6', 14; 20a, 20b; 24a, 24b, 24c) ont des épaisseurs différentes les unes des autres, respectivement.

7. Support d'enregistrement selon la revendication 6, caractérisé en ce que ladite paire de couches de permalloy (6, 6', 14; 20a, 20b; 24a, 24b, 24c) est constituée d'une couche supérieure (20a, 24a) située au plus près du film à magnétisation verticale (22) et une couche inférieure (20b, 24b) située au plus près du substrat (18) en un matériau non-magnétique, ladite couche supérieure (20a, 24a) étant plus mince que ladite couche inférieure (20b, 24b).

# FIG.1

# FIG.2

# FIG.3

# F I G . 4

REPRODUCTION OUTPUT (dB)

10

9

8

0

-10

-20

0    200    400    600

ENTIRE THICKNESS OF PERMALLOY (Å)

# F I G . 5

INITIAL PERMEABILITY
($\times 4f \times 10^{-7}$ H/m)

10000

1000

100

10

0    100    200    300

THICKNESS OF PERMALLOY (Å)

2

# F I G . 6

# F I G . 7

# F I G . 8

# F I G . 9

# F I G . 10

# F I G . 11

# F I G . 12